# FASCICULE DE BREVET EUROPEEN

(11) **EP 2 356 359 B1**
(45) Date de publication et mention de la délivrance du brevet: **05.06.2019**
(21) Numéro de dépôt: 09760931.7
(22) Date de dépôt: 12.11.2009
(51) Int. Cl.: B08B 5/02, B08B 9/00, F28G 7/00, F16K 31/363

(54) **CANON DEFLAGRATEUR COMPORTANT UN PISTON MOBILE**
VERPUFFUNGSVORRICHTUNG MIT EINEM BEWEGLICHEN KOLBEN
BLAST CANNON WITH MOBILE PISTON

(30) Priorité: 18.11.2008 FR 0806437
(43) Date de publication de la demande: 17.08.2011
(73) Titulaire: DYANERGIE, 75003 Paris (FR)
(72) Inventeur: GOMEZ, Rémi, 75015 Paris (FR); LAURENT, Nicolas, 51100 Reims (FR); MAJOREL, Thomas, 12150 Buzeins (FR); MEURVILLE, Jean-Marc, 89100 Nailly (FR); DEGRANGE, Michel, 75012 Paris (FR)
(74) Mandataire: Beaudouin-Lafon, Emmanuel
(86) Numéro de dépôt international: PCT/FR2009/001301
(87) Numéro de publication internationale: WO 2010/058093

(56) Documents cités:
- WO-A-01/80955
- WO-A-02/38994
- WO-A-97/16105
- WO-A-2008/003851
- DE-U1- 29 619 824
- DE-U1- 29 716 274
- GB-A- 2 161 250
- GB-A- 2 302 163
- US-B1- 6 216 721

## Description

L'invention concerne un canon qui est alimenté en gaz ou en air comprimé pour générer à fréquence régulière des déflagrations, et qui est utilisé par exemple pour effectuer des opérations de nettoyage.

### ARRIERE PLAN DE L'INVENTION

Un tel canon ou déflagrateur est connu notamment du document de brevet WO2008/003851, dans lequel il est utilisé pour détartrer des conduites internes d'un corps d'échange équipant une tour aéroréfrigérante de centrale nucléaire.

Ce déflagrateur connu comporte une chambre d'admission d'air comprimé, une buse de refoulement communiquant avec cette chambre d'admission, une chambre de régulation, et un piston mobile interposé entre ces deux chambres.

Le piston comporte une face orientée vers la buse qui est soumise à la pression régnant dans la chambre d'admission et une autre face orientée de façon opposée, et qui est soumise à la pression établie dans la chambre de régulation.

Ce piston est mobile entre une position fermée dans laquelle il est en appui sur un siège de la buse pour fermer cette buse, et une position ouverte dans laquelle il est espacé de ce siège de manière à mettre en communication la chambre d'admission avec l'ouverture de la buse afin de libérer la déflagration.

En fonctionnement, les déplacements du piston sont commandés par un organe de régulation qui pilote la pression dans la chambre de régulation : une déflagration est obtenue en faisant chuter la pression dans la chambre de régulation, après quoi une pression élevée est rétablie dans cette chambre pour refermer la buse.

L'organe de pilotage comprend un élément rotatif qui, suivant la position angulaire qu'il occupe, met la chambre de régulation en communication, soit avec la pression atmosphérique, soit avec le circuit d'alimentation en air comprimé.

La fréquence des déflagrations est ainsi ajustée en modifiant la vitesse de l'élément rotatif, ce qui implique d'entraîner cet organe un moteur à vitesse variable qui est en soi relativement coûteux.

Le document GB 2 161 250 décrit un déflagrateur de l'art antérieur.

### OBJET DE L'INVENTION

Le but de l'invention est de remédier à cet inconvénient en proposant une architecture de canon déflagrateur moins coûteuse.

### RESUME DE L'INVENTION

A cet effet, l'invention a pour objet un déflagrateur, comportant une chambre d'admission de gaz, une buse comprenant une ouverture communiquant avec cette chambre d'admission, une chambre de régulation, un piston mobile comportant en une face avant apte à venir en appui sur un siège entourant l'ouverture pour fermer cette ouverture, le piston comportant en outre deux faces d'orientations opposées et continûment soumises respectivement à la pression de la chambre d'admission et à la pression de la chambre de régulation, caractérisé en ce que la face avant porte un téton s'engageant dans l'ouverture pour obstruer cette ouverture sur toute une partie de la course du piston.

Avec cette solution, dès que la face avant du piston se décolle du siège, elle offre immédiatement une surface additionnelle soumise à la pression de la chambre d'admission, ce qui accélère le piston. Complémentairement, le téton obstruant la buse retarde l'ouverture pour qu'elle intervienne lorsque le piston a acquis une certaine vitesse et donc une certaine inertie.

L'accélération du piston et le retardement de l'ouverture évitent une instabilité à l'ouverture, ce qui permet de piloter le système en maintenant dans la chambre de régulation une pression moyenne constante. La fréquence des déflagrations peut en outre être ajustée en modifiant la valeur de cette pression moyenne.

L'invention concerne également un déflagrateur tel que défini ci-dessus, dans lequel le piston comporte une tête en matière caoutchouteuse délimitant la zone de contact par laquelle le piston vient en appui sur la buse.

L'invention concerne également un déflagrateur tel que défini ci-dessus, dans lequel la tête en matière caoutchouteuse porte le téton.

L'invention concerne également un déflagrateur tel que défini ci-dessus, comportant une chambre cylindrique dans laquelle coulisse le piston, la chambre de régulation étant délimitée par l'espace situé entre le piston et le fond de cette chambre.

### BREVE DESCRIPTION DES FIGURES

La figure 1 est une vue latérale en coupe du déflagrateur selon l'invention lorsque son piston occupe une position intermédiaire dans laquelle il n'est pas en appui sur le siège mais dans laquelle son téton est partiellement engagé dans la buse pour l'obstruer ;
La figure 2 est une vue latérale en coupe du déflagrateur selon l'invention lorsque son piston est en appui sur le siège de la buse, son téton étant complètement engagé dans cette buse ;
La figure 3 est une vue latérale en coupe du déflagrateur selon l'invention lorsque le piston occupe une position médiane dans laquelle il n'est pas en appui sur le siège, au delà de laquelle le téton est engagé dans la buse et en deçà de laquelle le téton est dégagé de la buse ;
La figure 4 est une vue latérale en coupe du déflagrateur selon l'invention lorsque le piston est espacé du siège de la buse, le téton étant complètement dégagé de cette buse.

### DESCRIPTION DETAILLEE DE L'INVENTION

Le déflagrateur selon l'invention qui est repéré par 1 dans les figures comprend un corps principal monobloc 2 de forme généralement cylindrique, s'étendant selon un axe longitudinal AX. Ce corps principal comporte une entrée 3 d'air ou de gaz comprimé située à l'une de ses extrémités, et une buse d'éjection 4 comportant une ouverture centrale 6 via laquelle sont libérées les déflagrations. La buse 4 et l'entrée 3 sont situées à des extrémités opposées du déflagrateur.

Ce corps principal 2 comporte également une chambre dite d'admission 7 cylindrique, située du côté de la buse 4, et communiquant directement avec l'ouverture centrale 6 de cette buse 4. Cette chambre d'admission 7 communique avec l'entrée 3 via plusieurs canaux d'admission longitudinaux dont deux, repérés par 8 et 9, sont représentés dans les figures.

Dans sa région centrale située entre l'entrée 3 et la chambre d'admission 7, le corps 2 comporte une chambre dite de régulation 11 cylindrique, délimitée par un alésage 12 dans lequel coulisse un piston 13. Le corps 2 comporte également un canal de régulation 14, orienté radialement, et via lequel la chambre de régulation 11 est alimentée en air ou en gaz sous pression.

La chambre de régulation 11 est entourée par les canaux longitudinaux 8 et 9 qui mettent en communication l'entrée 3 située en amont de la chambre de régulation 11, avec la chambre d'admission 7 qui est située en aval de cette chambre de régulation 11.

Le piston 13 est interposé entre la chambre de régulation 11 et la chambre d'admission 7 en étant apte à coulisser selon la direction longitudinale AX, et il a un diamètre significativement inférieur au diamètre de la chambre d'admission 7. Ce piston comporte un corps 16 métallique coulissant dans l'alésage 12, et une tête 17 en matière élastique telle que du caoutchouc, située dans la chambre d'alimentation 7.

Ce piston 13 comporte une première face plane 18 portée par son corps 16, s'étendant selon un plan normal à l'axe AX, et qui est située dans la chambre de régulation pour être toujours soumise à la pression établie dans cette chambre de régulation 11.

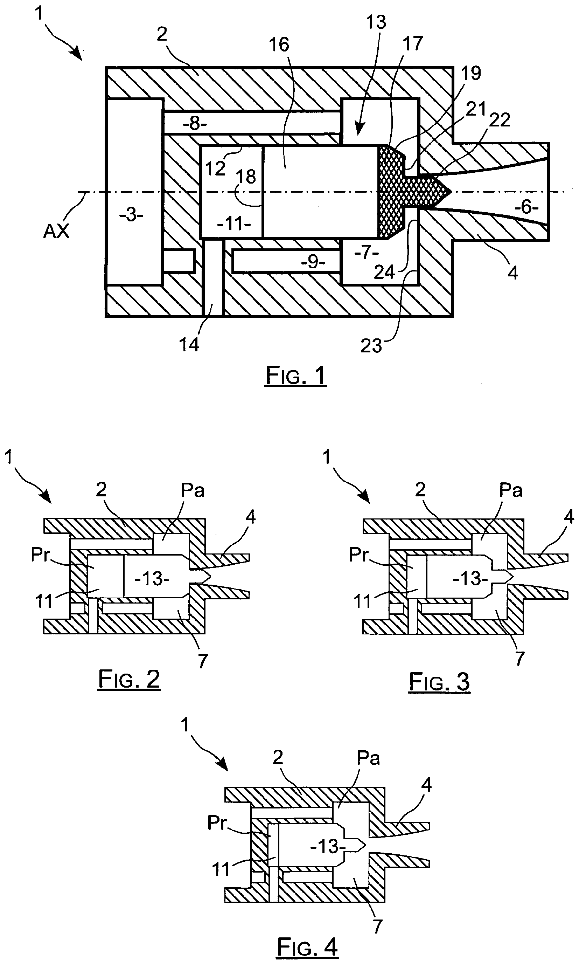

La tête 17 du piston 13, qui est située dans la chambre d'alimentation 7, est rigidement solidaire du corps 16. Cette tête comporte une face latérale cylindrique s'étendant dans le prolongement de la face latérale cylindrique du corps de piston 16. La face latérale cylindrique de la tête 17 est prolongée par une face tronconique 19, qui est elle-même prolongée par une face avant 21 s'étendant selon un plan normal à l'axe AX. La face avant 21 porte un téton central 22 s'étendant le long de l'axe AX, et qui, dans la situation de la figure 1, est partiellement engagé dans l'ouverture centrale 6 de la buse 4 pour l'obstruer.

La face tronconique 19 est continûment soumise à la pression régnant dans la chambre d'admission 7, pour toute position du piston 13. Cette face tronconique a une orientation opposée à celle de la face 18 du piston qui est située dans la chambre de régulation 11.

Complémentairement à cette tête de piston 17, la chambre d'admission 7 comporte une face avant 23 orientée selon un plan normal à l'axe AX, qui délimite un siège 24 de la buse 4, c'est-à-dire une zone avant entourant l'embouchure de l'ouverture centrale 6 de cette buse.

Comme le montre la figure 1, le siège 24 et la face avant 21 sont des faces planes en formes de couronnes de disques, venant en appui l'une sur l'autre lorsque le piston est en position fermée. En pratique, le siège 24 peut aussi avoir une forme torique d'un diamètre général légèrement inférieur au diamètre externe de la face d'appui.

En fonctionnement, l'entrée 3 du déflagrateur 1 est connectée à une source d'alimentation en air pressurisé, alors que le canal radial 14 est connecté à une source de régulation de pression. Ceci établit dans la chambre de régulation 11 une pression de régulation notée Pr, et dans la chambre d'admission une pression dite d'admission notée Pa, qui fluctue dans une gamme de valeurs significativement supérieures à Pr.

Partant d'une situation dans laquelle le piston 13 est en appui sur le siège 24, comme dans la figure 2, la pression d'admission Pa augmente graduellement dans la chambre d'alimentation 7. Le piston 13 reste alors en appui sur le siège 24 jusqu'à ce que la pression Pa atteigne une valeur seuil, notée Po, provoquant son déplacement.

Le piston étant soumis d'une part à la pression Pr appliquée à sa face 18 et d'autre part à la pression Pa appliquée à sa face tronconique 19 et à la pression atmosphérique Patm appliquée à l'extrémité de son téton 22, la valeur seuil Po dépend notamment du rapport de la superficie de la face 18 à la superficie de la projection de la face tronconique 19 sur un plan normal à l'axe AX.

Lorsque le piston débute son déplacement, sa face avant 21 se décolle du siège 24 de la buse 4, ce qui engendre une accélération importante du piston. En effet, dans cette situation, la face avant 21 constitue une face additionnelle qui est soumise à la pression Pr, complémentairement à la face tronconique 19. Ce phénomène d'accélération est encore accentué par le fait que le téton 22 obstrue l'ouverture 6 sur toute une partie de la course du piston, pour éviter une chute de la pression Pr immédiatement après décollement du piston.

Le piston 13 continue alors sa course, jusqu'à atteindre une position médiane correspondant à celle de la figure 3, et au delà de laquelle le téton 22 va être complètement dégagé de l'ouverture 6. Ce dégagement libère la déflagration, par écoulement à travers l'ouverture 6 de l'air pressurisé que contient la chambre d'admission 7, ce qui correspond à la situation de la figure 4.

Cette déflagration provoque une chute de la pression Pa régnant dans la chambre d'admission 7, ce qui provoque le retour du piston 13 en appui sur le siège 24 de la buse 4, ce qui correspond à nouveau à la situation de la figure 2.

Ainsi, le décollement du piston 13 provoque une augmentation brutale des efforts auxquels il est soumis puisque la face avant 21 constitue une surface additionnelle sur laquelle est exercée la pression d'admission Pa dès que le piston se décolle.

Cette solution apporte en particulier un régime stable d'ouverture du piston 13, évitant qu'il ne se referme rapidement après ouverture, cette stabilité étant encore accrue par la présence du téton 22 qui évite une chute rapide de la pression Pa. Plus concrètement, la pression Pa provoque le décollement du piston dès qu'elle atteint la valeur Po, mais ce décollement engendre de lui-même une accélération importante du piston, lui conférant ainsi rapidement une énergie cinétique suffisante pour éviter qu'il ne se referme trop vite sur le siège 24.

En pratique, la pression Pr de la chambre de régulation est régulée pour avoir une valeur moyenne constante, et le piston effectue des allers retours, provoquant des déflagrations à une fréquence constante qui dépend directement de la pression de régulation Pr. L'augmentation de la force de frappe, c'est-à-dire de la pression Pa lors de l'ouverture, et donc la diminution de la fréquence de frappe, pour un débit d'alimentation constant, est obtenue en augmentant la pression de régulation Pr.

Afin de réduire la valeur moyenne de la pression de Pr, il est avantageux d'augmenter le diamètre de la face avant 21 de manière à ce qu'il soit relativement proche du diamètre de la face 18. Ce dimensionnement permet en outre d'accroître l'accélération à laquelle est soumis le piston lorsqu'il se décolle du siège de la buse.

Il faut noter que la pression Pr moyenne est constante, mais les variations du volume de la chambre de régulation dues aux déplacements du piston font varier la valeur instantanée de la pression de régulation entre deux valeurs extrêmes, la valeur de consigne de la pression de régulation correspondant alors à une valeur de pression moyenne.

Dans ce cadre, la chambre de régulation peut être reliée à capacité maintenue à pression sensiblement constante, et ayant un volume très supérieur à celui de la chambre de régulation, pour diminuer, voire annuler les variations de la pression instantanée dans la chambre de régulation.

En ce qui concerne la tête du piston, elle est prévue en caoutchouc pour amortir les chocs. Son téton 22 a un diamètre proche de celui de l'ouverture 6, pour l'obstruer, mais pas nécessairement de manière étanche. En d'autres termes, le jeu radial existant entre la face interne du téton et la face interne de l'ouverture 6 peut être de l'ordre de quelques dixièmes de millimètres.

D'une manière générale, l'invention permet ainsi de se dispenser d'un système de commande électromécanique rotatif ou à électrovanne qui est coûteux, avec lequel les fréquences de fonctionnement du déflagrateur sont limitées par les qualités intrinsèques à ce système.

Avec le déflagrateur selon l'invention, le dispositif de régulation de pression peut être très simple puisqu'il se borne à maintenir la pression de régulation à une valeur moyenne constante.

## Revendications

1. Déflagrateur (1), comportant une chambre d'admission (7) de gaz, une entrée de gaz (3) communiquant avec cette chambre d'admission (7) et une buse (4) comprenant une ouverture (6) communiquant avec cette chambre d'admission (7) et via laquelle sont libérées des déflagrations de gaz, une chambre de régulation (11) fluidiquement isolée de la chambre d'admission, un piston (13) mobile comportant une face avant (21) apte à venir en appui sur un siège (24) entourant l'ouverture (6) pour fermer cette ouverture (6), le piston (13) comportant en outre deux faces (18, 19) d'orientations opposées et continûment soumises respectivement à la pression (Pa) de la chambre d'admission (7) et à la pression (Pr) de la chambre de régulation (11), et dans lequel la face avant (21) porte un téton (22) s'engageant dans l'ouverture (6) pour obstruer cette ouverture (6) sur toute une partie de la course du piston (13).

2. Déflagrateur selon la revendication 1, dans lequel le piston (13) comporte une tête (17) en matière caoutchouteuse délimitant la zone de contact par laquelle le piston vient en appui sur la buse (4).

3. Déflagrateur selon la revendication 2, dans lequel la tête (17) en matière caoutchouteuse porte le téton (22).

4. Déflagrateur selon la revendication 1 ou la revendication 2, dans lequel la face (19) du piston (13) qui est continuellement soumise à la pression (Pa) de la chambre d'admission (7) a une forme tronconique.

5. Déflagrateur selon l'une des revendications 1 à 4, comportant une chambre cylindrique dans laquelle coulisse le piston (13), la chambre de régulation (11) étant délimitée par l'espace situé entre le piston (13) et le fond de cette chambre.

## Patentansprüche

1. Deflagrationsvorrichtung (1), umfassend eine Gaseinlasskammer (7), einen Gaseinlass (3), der mit dieser Einlasskammer (7) in Verbindung steht, und eine Düse (4), die eine Öffnung (6) umfasst, die mit dieser Einlasskammer (7) in Verbindung steht und über die Gasdeflagrationen freigesetzt werden, eine Regelkammer (11), die strömungstechnisch von der Einlasskammer isoliert ist, einen beweglichen Kolben (13), der eine Stirnfläche (21) hat, die geeignet ist, auf einem die Öffnung (6) umgebenden Sitz (24) zur Anlage zu kommen, um diese Öffnung (6) zu verschließen, wobei der Kolben (13) ferner zwei Ausrichtungsflächen (18, 19) umfasst, die einander entgegengesetzt und kontinuierlich dem Druck (Pa) der Einlasskammer (7) bzw. dem Druck (Pr) der Regelkammer (11) ausgesetzt sind, und bei der die Stirnfläche (21) einen Zapfen (22) trägt, der sich in die Öffnung (6) einfügt, um diese Öffnung (6) über einen ganzen Teil des Hubes des Kolbens (13) zu blockieren.

2. Deflagrationsvorrichtung nach Anspruch 1, bei der der Kolben (13) einen Kopf (17) aus Kautschuk umfasst, der die Kontaktzone begrenzt, über die der Kolben auf der Düse (4) zur Anlage kommt.

3. Deflagrationsvorrichtung nach Anspruch 2, bei der der Kopf (17) aus Kautschuk den Zapfen (22) trägt.

4. Deflagrationsvorrichtung nach Anspruch 1 oder Anspruch 2, bei der die Fläche (19) des Kolbens (13), die ständig dem Druck (Pa) der Einlasskammer (7) ausgesetzt ist, eine kegelstumpfförmige Form hat.

5. Deflagrationsvorrichtung nach einem der Ansprüche 1 bis 4, umfassend eine zylindrische Kammer, in der der Kolben (13) gleitet, wobei die Regelkammer (11) von einem Raum begrenzt ist, der sich zwischen dem Kolben (13) und dem Boden dieser Kammer befindet.

## Claims

1. Blast cannon (1) including a gas inlet chamber (7), a gas inlet (3) communicating with that inlet chamber (7) and a nozzle (4) comprising an opening (6) communicating with that inlet chamber (7) and via which gas deflagrations are released, a regulating chamber (11) fluidically isolated from the inlet chamber, a mobile piston (13) including a front face (21) adapted to come to bear on a seat (24) surrounding the opening (6) to close that opening (6), the piston (13) further including two faces (18, 19) with opposite orientations and continuously subjected respectively to the pressure (Pa) of the inlet chamber (7) and the pressure (Pr) of the regulation chamber (11), and in which the front face (21) carries a nipple (22) engaging in the opening (6) to obstruct that opening (6) over the whole of a portion of the stroke of the piston (13).

2. Blast cannon according to claim 1, in which the piston (13) includes a rubbery material head (17) delimiting the contact zone in which the piston comes to bear on the nozzle (4).

3. Blast cannon according to claim 2, in which the rubbery material head (17) carries the nipple (22).

4. Blast cannon according to claim 1 or claim 2, in which the face (19) of the piston (13) that is continuously subjected to the pressure (Pa) of the inlet chamber (7) has a frustoconical shape.

5. Blast cannon according to any one of claims 1 to 4, including a cylindrical chamber in which the piston (13) slides, the regulation chamber (11) being delimited by the space between the piston (13) and the end wall of that chamber.
